# EUROPEAN PATENT APPLICATION

(11) **EP 2 208 948 A2**
(43) Date of publication of application: **21.07.2010**
(21) Application number: 10150695.4
(22) Date of filing: 13.01.2010
(51) Int. Cl.: F24J 2/16, F24J 2/54

(54) **Solar energy collector**

(30) Priority: 14.01.2009 TW 98200608 U
(71) Applicant: Sunyen Co., Ltd., Hsinchu County 302 (TW)
(72) Inventor: Tu, Yu-Ta, Jhubei City (TW)
(74) Representative: Chaillot, Geneviève

(57) **Abstract**

A device for collecting solar energy is disclosed. The collector includes a collecting structure (2), a reflecting structure (3) and a motor (4). The collecting structure is composed of a mounting frame (20) and a plurality of 5collecting panels (21) disposed around the mounting frame. The reflecting structure is composed of a stand (30) and a reflecting board (31) supported by the stand. The motor rotates the collector or reflector for tracingly reflecting sunbeams and collecting solar energy with mobility.

## Description

### Background of the Invention

### 1. Technical Field

The invention generally relates to energy transfer, particularly to solar energy collection.

### 2. Related Art

Price climbing of petroleum forces replacement energy to be developed fast. Green energy under natural environment, such solar energy and wind power, can effectively reduce greenhouse gas emission. Therefore, green energy must be seriously treated.

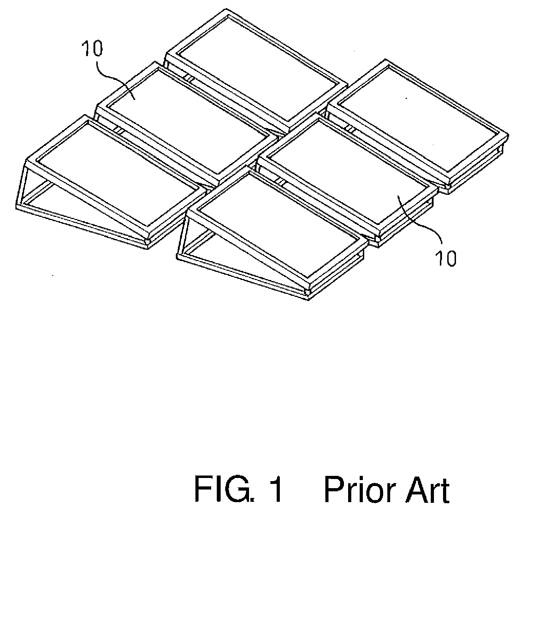

A conventional mechanism of collecting solar power is illustrated in FIG. 1. Solar power is collected by flatly arranged solar panels 10 to be converted into another type of energy. However, solar power is hard to be effectively collected if the solar panels 10 can not correspond with the sun to move. Furthermore, the flatly arranged solar panels 10 must occupy a vast area. Thus the conventional arrangement can not be used in a limited space.

### Summary of the Invention

An object of the invention is to improve efficiency of collecting solar power in a limited space.

To accomplish the above object, the invention includes a collecting structure, a reflecting structure and a motor. The collecting structure is composed of an mounting frame and a plurality of collecting panels disposed around the mounting frame. The reflecting structure is composed of a stand and a reflecting board supported by the stand. The motor rotates the collector or reflector for tracingly reflecting sunbeams and collecting solar energy with mobility.

### Brief Description of the Drawings

FIG. 1 shows a conventional arrangement of solar power collecting system;
FIG. 2 is a perspective view of an embodiment with fixed reflecting structure and rotary collecting structure of the invention;
FIG. 3 is a side view of FIG. 2;
FIG. 4 shows a modified arrangement of the embodiment in FIGs. 2 and 3;
FIG. 5 is a perspective view of another embodiment with rotary reflecting structure and fixed collecting structure of the invention;
FIG. 6 is a side view of FIG. 5; and
FIG. 7 shows a modified arrangement of the embodiment in FIGs. 5 and 6.

### Detailed Description of the Invention

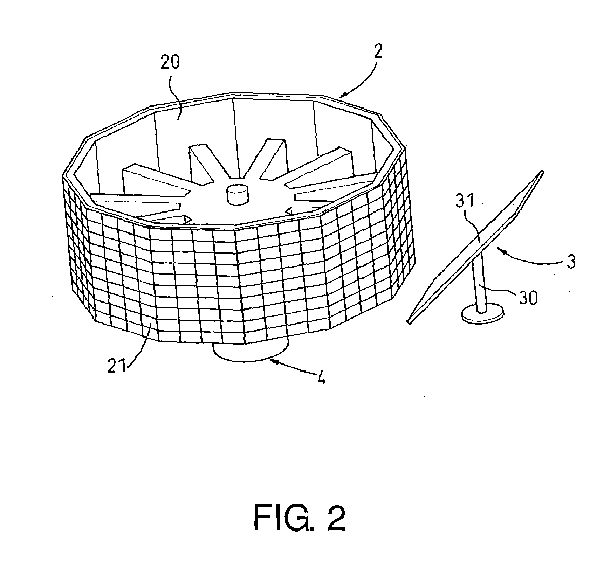

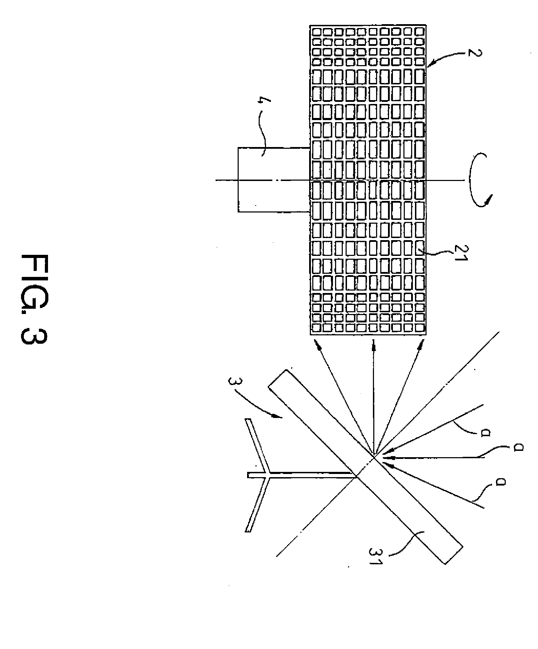

Referring to FIGs. 2 and 3, the solar energy collector includes a collecting structure 2, a reflecting structure 3 and a motor 4.

The collecting structure 2 is composed of a mounting frame 20 and a plurality of collecting panels 21 disposed around outside of the mounting frame 20. By means of this 3-dimensional arrangement, it can effectively use 5a mounting space. In other words, in comparison with the conventional structure with planar arrangement, the invention can increase solar power collecting area in a limited space to maximize the quantity of solar power collection.

The reflecting structure 3 is composed of a stand 30 and a reflecting board 31 supported by the stand 30. The reflecting structure 3 is arranged near the collecting structure 2. The reflecting board 31 faces the collecting panels 21 at a predetermined angle for making the sunbeams projecting onto the reflecting board 31 reflected towards the collecting panel 21.

FIG. 3 shows the status of sunbeam reflection. The collecting panels 21 not only accept direct sunbeams, but also receive more sunbeams reflected by the reflecting board 31.

Back referring to FIG. 2, the motor 4 is connected to the mounting frame 20 for driving the collecting structure 2 to rotate. The rotary collecting structure 2 can trace the sun to absorb much solar power with high efficiency.

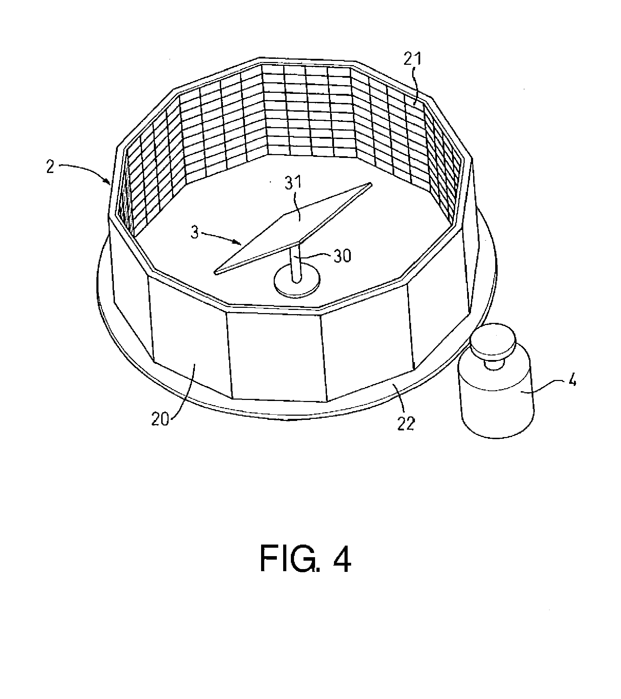

FIG. 4 illustrates another embodiment of the invention. The mounting frame 20 of the collecting structure 2 forms a loop whose bottom connects a turntable 22. The turntable 22 is rotated by the motor 4. The reflecting structure 3 is disposed within the loop formed by the collecting structure 2.
Similarly, the rotary collecting structure 2 can trace the sun to absorb solar power.

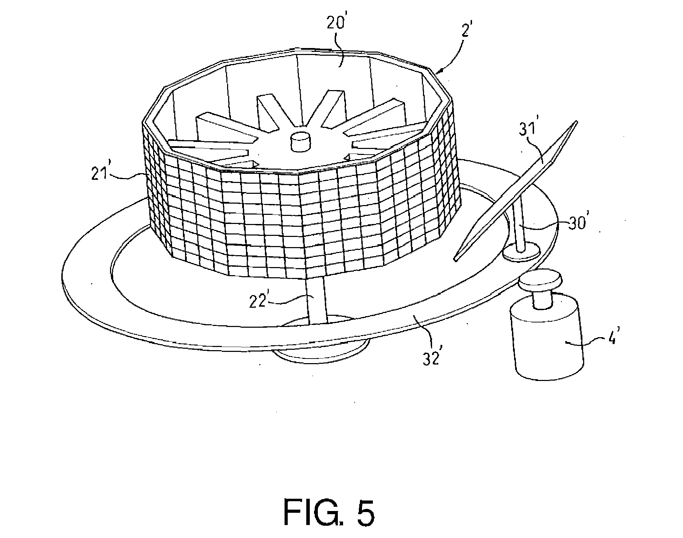

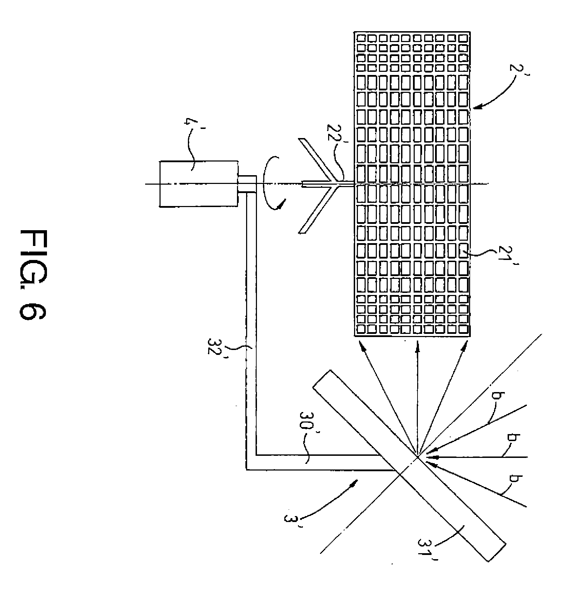

Correspondingly, besides rotating the collecting structure 2 to trace the sun as the above embodiments, FIGs. 5 and 6 illustrate another embodiment with a fixed collecting structure 2' and a rotary reflecting structure 3 driven by a motor 4'.

The collecting structure 2' includes a mounting frame 20' and a plurality of collecting panels 21' disposed around outside of the mounting frame 20'. Preferredly, an axle support 22' is provided under the mounting frame 20' for supporting the mounting frame 20' on the ground.

The reflecting structure 3' includes a stand 30' and a reflecting board 31' supported by the stand 30'. The reflecting structure 3' is arranged near the collecting structure 2'. The reflecting board 31' faces the collecting panels 21' at a predetermined angle for making the sunbeams projecting onto the reflecting board 31' reflected towards the collecting panel 21'. Additionally, the stand 30' is mounted on a turn ring 32' disposed around the collecting structure 2'.

The motor 4' engages with the turn ring 32' for rotating the reflecting structure 3' around the collecting structure 2'. This also can form an effect of sun tracing to absorb much solar power with high efficiency.

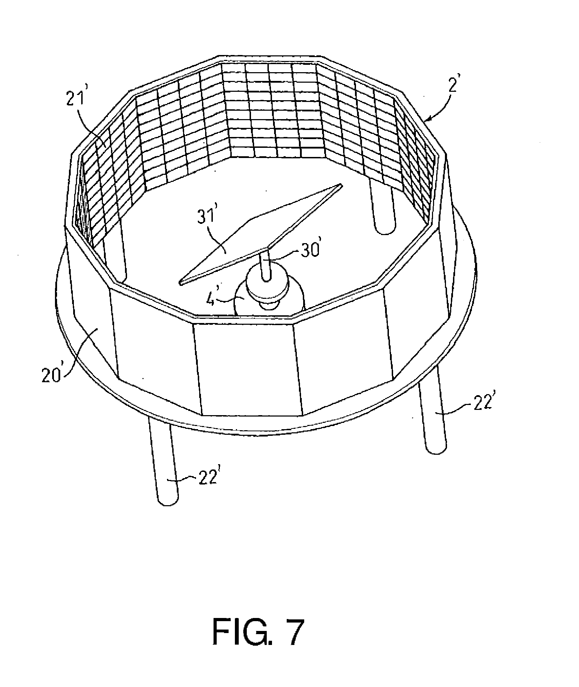

FIG. 7 illustrates a modified arrangement of the embodiment shown in FIGs. 5 and 6. The mounting frame 20' of the collecting structure 2' forms a loop whose bottom connects axle supports 22', so that the collecting structure 2' fixedly stands on the ground. The reflecting structure 3' is arranged within the loop formed by the mounting frame 20'. The stand 30' of the reflecting structure 3' is engaged with the motor 4' to rotate the reflecting board 31'. Similarly, the rotary reflecting structure 3' can trace the sun to absorb solar power.

It will be appreciated by persons skilled in the art that the above embodiments have been described by way of example only and not in any limitative sense, and that various alterations and modifications are possible without departure from the scope of the invention as defined by the appended claims.

## Claims

1. A solar energy collector comprising:
a collecting structure (2) comprising a mounting frame (20) and a plurality of collecting panels (21) disposed a lateral side of the mounting frame (20);
a reflecting structure (3) comprising a stand (30) and a reflecting board (31) supported by the stand (30), and arranged near the collecting structure (2), wherein the reflecting board (31) faces the collecting panels (21) at a predetermined angle for making sunbeams projecting onto the reflecting board (31) reflected towards the collecting panel (21); and
a motor (4) rotating the collecting structure (2) for sun tracing.

2. The solar energy collector of claim 1, wherein the mounting frame (20) is of an annular shape.

3. The solar energy collector of claim 2, wherein the reflecting structure (3) is disposed within the mounting frame (20).

4. The solar energy collector of claim 1, wherein the mounting frame (20) connects a turntable (22) rotated by the motor (4).

5. The solar energy collector of claim 2, wherein the mounting frame (20) connects a turntable (22) rotated by the motor (4).

6. The solar energy collector of claim 3, wherein the mounting frame (20) connects a turntable (22) rotated by the motor (4).

7. A solar energy collector comprising:
a collecting structure (2) comprising a mounting frame (20) and a plurality of collecting panels (21) disposed a lateral side of the mounting frame (20);
a reflecting structure (3) comprising a stand (30) and a reflecting board (31) supported by the stand (30), and arranged near the collecting structure (2), wherein the reflecting board (31) faces the collecting panels (21) at a predetermined angle for making sunbeams projecting onto the reflecting board (31) reflected towards the collecting panel (21); and
a motor (4) rotating the reflecting structure (3) for sun tracing.

8. The solar energy collector of claim 7, wherein the mounting frame (20) is of an annular shape.

9. The solar energy collector of claim 8, wherein the reflecting structure (3) is disposed within the mounting frame (20).

10. The solar energy collector of claim 7, wherein the collecting structure (2) is provided with an axle support (22') for standing on the ground.

11. The solar energy collector of claim 8, wherein the collecting structure (2) is provided with an axle support (22') for standing on the ground.

12. The solar energy collector of claim 9, wherein the collecting structure (2) is provided with an axle support (22') for standing on the ground.

13. The solar energy collector of claim 7, wherein the stand (30) connects a turn ring (32') around the collecting structure (2), and the turn ring (32') is rotated by the motor (4).

14. The solar energy collector of claim 8, wherein the stand (30) connects a turn ring (32') around the collecting structure (2), and the turn ring (32') is rotated by the motor.
